Europäisches Patentamt

European Patent Office

Office européen des brevets

(19)

(11) Publication number: 0 398 553
A1

(12) EUROPEAN PATENT APPLICATION

(21) Application number: 90304813.0

(22) Date of filing: 03.05.90

(51) Int. Cl.5: F16D 65/16, F16D 55/225

(30) Priority: 17.05.89 US 353040

(43) Date of publication of application:
22.11.90 Bulletin 90/47

(84) Designated Contracting States:
DE FR GB IT

(71) Applicant: GENERAL MOTORS CORPORATION
General Motors Building 3044 West Grand
Boulevard
Detroit Michigan 48202(US)

(72) Inventor: Schenk, Donald E.
567 Rader Drive
Vandalia, Ohio 45377(US)
Inventor: DeHoff, Edward J.
6430 Taylorville Road
Huber Heights, Ohio 45424(US)
Inventor: Shaw, Schuyler S.
7569 Gardenside Drive
Dayton, Ohio 45414(US)

(74) Representative: Denton, Michael John et al
Patent Section Vauxhall Motors Limited 1st
Floor Gideon House 26 Chapel Street
Luton Bedfordshire LU1 2SE(GB)

(54) A disc brake for motor vehicle.

(57) A vehicle wheel disc brake (7) activated by a master cylinder (10) including a rotor (14) fixably connected to the vehicle wheel, the rotor having a rotational axis (16), a bracket (18) having a position generally fixed with respect to the rotor, a caliper (24) slidably mounted with respect to the bracket and in a plane generally perpendicular to the rotor rotational axis, first hydraulic cylinder (28) activated by pressure delivered by the master cylinder connected with the caliper, the first hydraulic cylinder having a piston (32) for frictionally engaging the rotor to restrain rotation thereof, second hydraulic cylinder (40) positioned between the caliper and the bracket, the second hydraulic cylinder having a piston (38) being pressurized by a reaction force experienced between the caliper and the bracket when the first hydraulic cylinder is activated, third hydraulic cylinder (44) fluidly connected with the second hydraulic cylinder to receive pressure therefrom, the third hydraulic cylinder having a piston (48) to frictionally engage the rotor to restrain rotation thereof.

FIG.1

## A DISC BRAKE FOR MOTOR VEHICLE

The field of the present invention is that of disc brakes for a motor vehicle, and methods of utilization thereof.

It is known in the art to provide disc brakes for automotive vehicles. The disc brake includes a rotor which is fixably attached to the wheel. Connected to the vehicle in a non-rotative manner is a bracket which holds a caliper. The caliper has a hydraulic cylinder which is activated to force a piston against the rotor to frictionally engaging the same to restrain movement thereof. An example of a disc brake can be found in US Patent No. 4,446,948. To meet ever more stringent requirements regarding the fuel economy of vehicles, it is a constant quest to provide automotive components which provide the same or improved functions while decreasing the overall weight of the vehicle.

The present invention provides a disc brake an an alternative to the type described in the above-noted patent. The present invention provides a disc brake which uses the reaction force between the caliper and the rotor to pressurize an auxiliary booster piston which adds to the braking capacity of the disc brake.

A disc brake in accordance with the present invention is characterised by the features specified in the characterising portion of Claim 1.

In its preferred embodiment, the present invention provides a stabilization valve which enables the self-energization to be linear with respect to the pressure delivered to the caliper by the master cylinder.

It is an object of the present invention to provide a self-energizing disc brake for a motor vehicle.

The present invention will now be described, by way of example, with reference to the accompanying drawings, in which:-

FIGURE 1 is a cross-sectional view taken along line 1-1 of FIGURE 2 of a preferred embodiment of disc brake in accordance with the present invention;

FIGURE 2 is a view, partially sectioned, taken along the line 2-2 in Figure 1;

FIGURE 3 is a cross-sectional view, partially sectioned, of an alternative embodiment of disc brake according to present invention;

FIGURE 4 is a cross-sectional view, partially sectioned, of another preferred embodiment of the present invention;

FIGURE 5 is a cross-sectional view on the line 4-4 of the embodiment of Figure 4 with portions shown out of position for clarity;

FIGURE 6 is a sectional view of a compensation valve as shown in Figure 5;

FIGURE 7 is a cross-sectional view of a stabilizational valve;

FIGURE 8 is an output pressure versus master cylinder pressure diagram of an unstabilized output; and

FIGURE 9 is a stabilized output versus master cylinder output pressure curve.

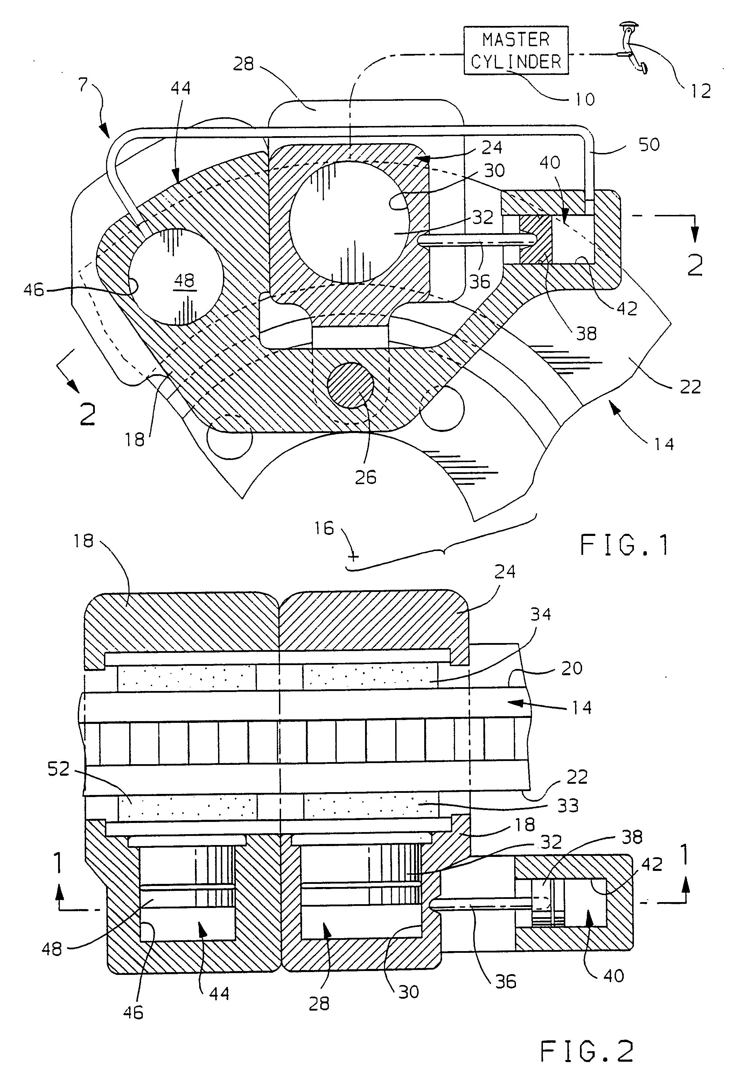

Referring to FIGURES 1 and 2, a disc brake 7 in accordance with the present inventions is activated by a conventional master cylinder 10 which is in turn operated by a foot pedal 12 in a conventional manner. Fixably attached to the wheel (not shown) of the motor vehicle is a rotor 14. The rotor has a rotational axis 16. Connected with the vehicle and having a position generally fixed with respect to the rotational axis 16 of the rotor 14 is a bracket 18.

The rotor 14 has two sides 20, 22 which provide frictional engaging surfaces. A caliper 24 is mounted on the bracket 18 in a plane generally perpendicular to to axis 16, and is slidably mounted on the bracket via a pivotal connecting pin 26. In the embodiment shown, the caliper 24 has relative sliding movement perpendicular to the plane of the rotor 14 (parallel to axis 16) since it is a dual acting brake caliper. However, the caliper 24 also has relative movement along the plane of the rotor 14 with respect to the bracket 18. Connected with the caliper 24 is a first hydraulic cylinder 28. The first hydraulic cylinder 28 includes a bore 30 within the caliper 24 with a caliper piston 32 slidably mounted therein. This design can be of a conventional nature, and the caliper piston 32 carries with it a brake shoe 33 which provides the lining which makes engagement with one side 22 of the rotor 14. Typically, the caliper 24 will be a "C" clamp shape, therefore, activation of the first hydraulic cylinder 28 will cause the caliper piston 32 to engage the rotor 14 and to push the caliper piston 24 inward, thereby causing an (outboard) brake shoe 34 to come in contact with the other side 20 of the rotor 14, thereby providing braking on both sides of the rotor in a conventional manner. However, as previously mentioned, the caliper shown is also pivotally connected with the bracket 18. Therefore, the activation of the first hydraulic cylinder 28 by the master cylinder 10 causes the caliper 24 to be urged, as shown, to the right forcing a plunger 36 in the same direction. The plunger 36 makes contact with a piston 38 of a second hydraulic cylinder 40. In the embodiment shown, the second hydraulic cylinder 40 (sometimes referred to as the booster or reaction cylinder) has a bore 42 in the bracket 18 with the piston 38 slidably mounted therein. However, in an alternative embodiment to be explained later the bore 42 can be in the caliper and the piston can abut against the bracket.

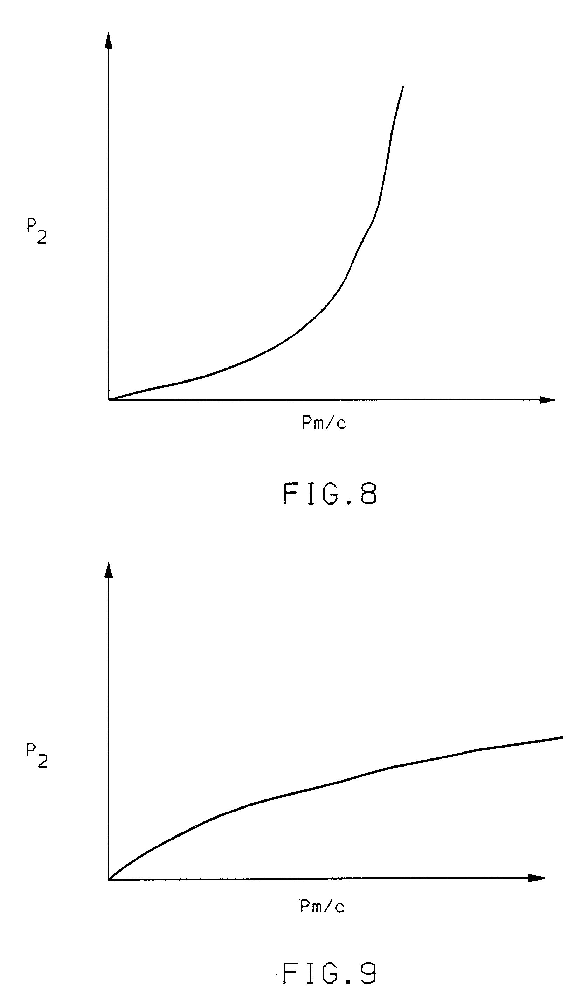

The second hydraulic cylinder 40, when pressurized by the reaction force between the caliper 24 and the bracket 18, will cause a hydraulic pressure to be delivered to a bore 46 of a third or auxiliary hydraulic cylinder 44 via line 50. The third hydraulic cylinder 44 has a brake shoe 52 (attached to a piston 48 slidably mounted in the bore 46) which may slide perpendicular to the rotor 14 with respect to the bracket 18, but other than movement allowed by the clearances is fixed with respect to the bracket 18 in a plane parallel to the rotor 14. If the output of the second hydraulic cylinder 40 is not stablilized, the pressure feed to the third hydraulic cylinder 44 will go up in a nonstable manner, almost logarithmically when the first hydraulic cylinder 28 is applied as shown in FIGURE 8.

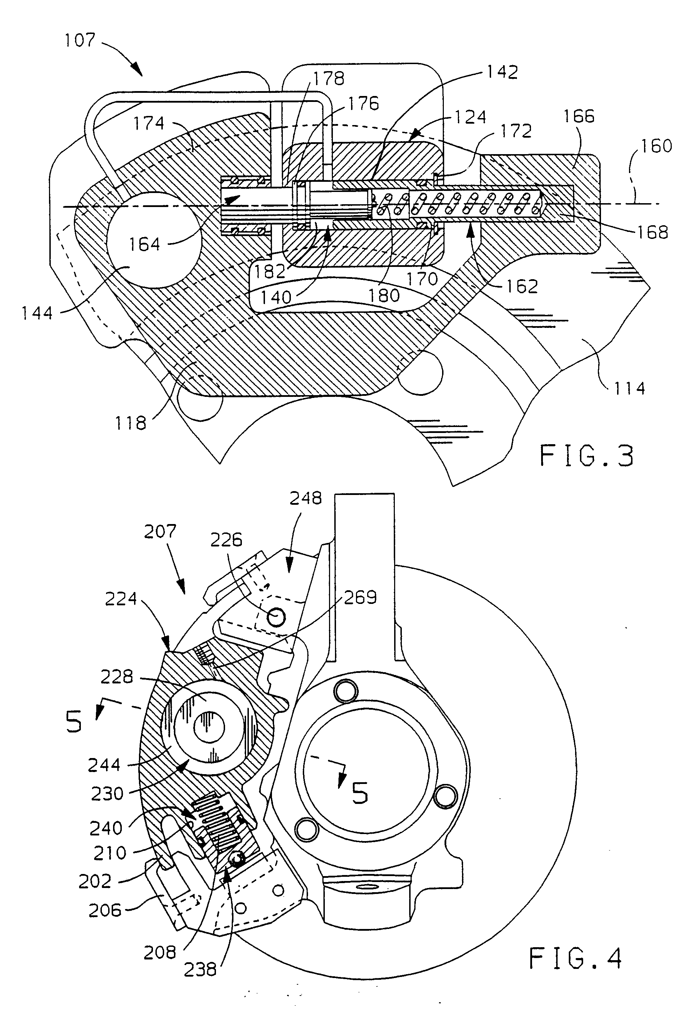

Referring additionally to FIGURE 3, an alternative embodiment of disc brake 107 of the present invention is provided. Like parts have the prefix 100 when compared to the arrangement in Figures 1 and 2. The first hydraulic cylinder of the caliper 124 is like that previously described. In this alternative version, instead of being pivotally connected with respect to the bracket 118, the caliper 124 is slidably mounted along a line 160 generally parallel with the plane of the rotor 114 forming an arc with respect to the rotor 114. Suspending the caliper 124 is a second hydraulic cylinder 140 provided by a sleeve 162 which receives a reciprocally mounted plunger 164. The sleeve 162 has a closed end 168 for making contact with an ear 166 of the bracket 118. The ear 166 has an oblong aperture in a direction perpendicular to the rotor 114 to allow the sleeve 162 to travel therein. The sleeve 162 has a flange 170 which engages with a snap ring 172 within the caliper 124 limiting its respective movement with respect thereto in the right hand direction as shown in FIGURE 3. In like manner, the plunger 164 is fixed within an oblong aperture of an opposite ear 174, and has a flange 176 preventing its total separation from the caliper 124 in the left direction. The sleeve 162 and plunger 164 are slidable in a bore 142 in the caliper 124 and define a chamber 182 therebetween. Seals on the sleeve 162 and plunger 164 seal the chamber 182. The advantage of this configuration is that the caliper 124 travels in a straight line when engaging the rotor 114 after being activated by the master cylinder 10 and not along the arc. Therefore, the caliper 124 will experience induced radial sliding movement with respect to the rotor 114 when engaging the rotor 114. Also, the secondary cylinder 140 will be activated when the disc brake 107 is applied in either the forward or rearward direction.

In the forward direction, the sleeve 162 will contact the ear 166 of the bracket 118 to the right and the plunger 164, being held by a caliper flange 178 to the right will be compressed against a biasing spring 180 to pressurize the chamber 182 between the plunger 164 and the sleeve 162. This pressure will be fed to the third hydraulic cylinder 144. If the disc brake 107 is applied when the rotor 114 rotates in an opposite direction, the sleeve 162 will be held from moving to the left and the plunger 164 will move to the right against the biasing spring 180, again pressurizing the chamber 182.

Referring to FIGURES 4-7, a further alternative prefered embodiment of disc brake 207 of the present invention is provided. The first hydraulic cylinder of the present is activated by the master cylinder as before described. However, it acts upon a two step piston 230 which has two outside diameters sealed within concentric bores of the caliper 224. The pressure delivered from the master cylinder only acts upon the first inner concentric area 228 (the fluid pressure areas of the piston 230 are concentric as a matter of simplicity of design but need not be in another application). The third hydraulic cylinder is provided by the outer second diameter area 244 which is exposed to the pressure originally generated by a second hydraulic cylinder 240 as described below.

The caliper 224 is pivotally connected with respect to the bracket 218 along one end by a pin 226. The caliper 224 also has a guide boss 202 along the other end fitting within a curved alignment fork 206 in the bracket 218. Slidably mounted in a bore 210 of the caliper 224 and biased outward by a spring 208 is the piston 238 of the second hydraulic cylinder 240 which abuts against the bracket 218. Activation of the disc brake 207 causes the caliper 224 to rotate with respect to the bracket 218 causing the spring 208 to be compressed. The pressure from the second hydraulic cylinder 240 is fed to a stabilization valve 407, whose function will later be described, before being fed to the third hydraulic cylinder or the outer second diameter area 244 of the piston 230 (via inlet 269).

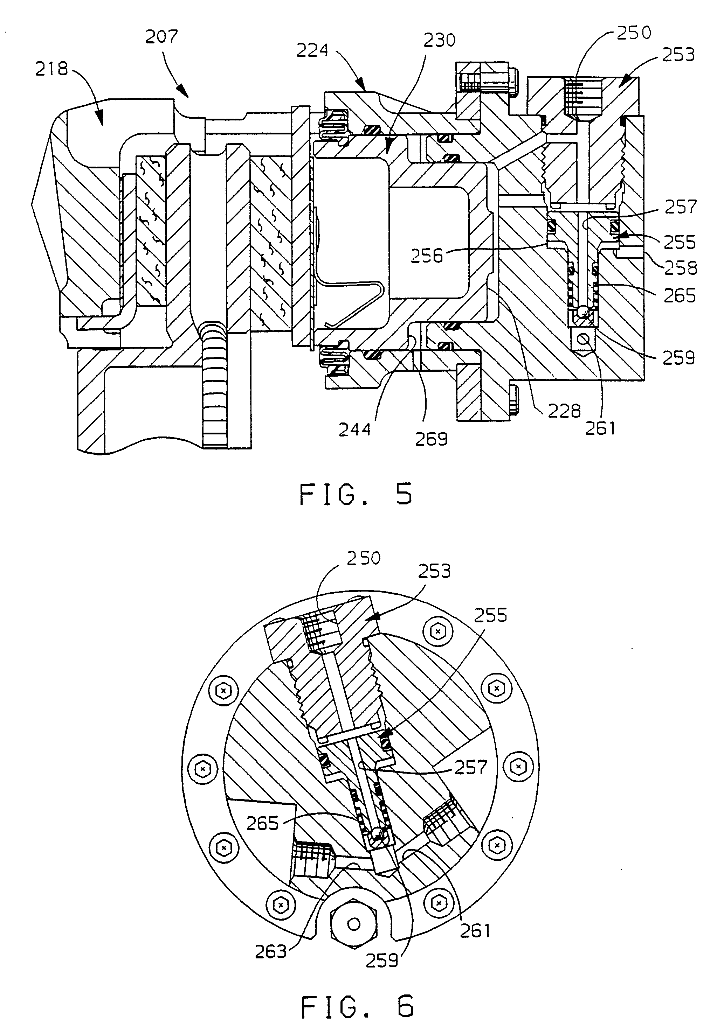

Fluidly joining the outer second diameter area 244 of the piston 230, the master cylinder (via an inlet 250) and the second hydraulic cylinder 240 is a compensation valve 253. The compensation valve 253 has as previously mentioned a master cylinder inlet 250 and a "T" section 255 with a central bore 257 and which impinges upon a valve ball 259 to close off the central bore. The "T" section 255 is sealingly slidably mounted in a bore 256 of similar shape, with a portion of the bore between its larger and smaller diameter vented to atmosphere by way of an aperture 258. The valve ball 259 is fixed in the bore 256. When pressure is exerted from the master cylinder, the "T" section 255 is forced downward (to the position shown in Figures 5 and 6) closing off access from the master cylinder to the second hydraulic cylinder 240 of the caliper 224 (via inlet 261) and to the outer second diameter area 244 (via outlet 263) of the piston 230. However, in the absence of pressure in the master cylinder, a spring 265 biasing of the "T" section 255 forces it upward allowing the secondary hydraulic cylinder 240 and the outer second diameter area 244 to be exposed to the master cylinder. The first inner concentric area 228 remains exposed to the master cylinder. The above is important since in a non-activated state, vibration or heat build-up in the disc brake 207 could inadvertently cause expansion of fluid in one of the cylinders causing the disc brake 207 to actuate. The above is typically experienced by virtue of a heat build-up in the second hydraulic cylinder 240 causing the outer second diameter area 244 to experience a pressure output.

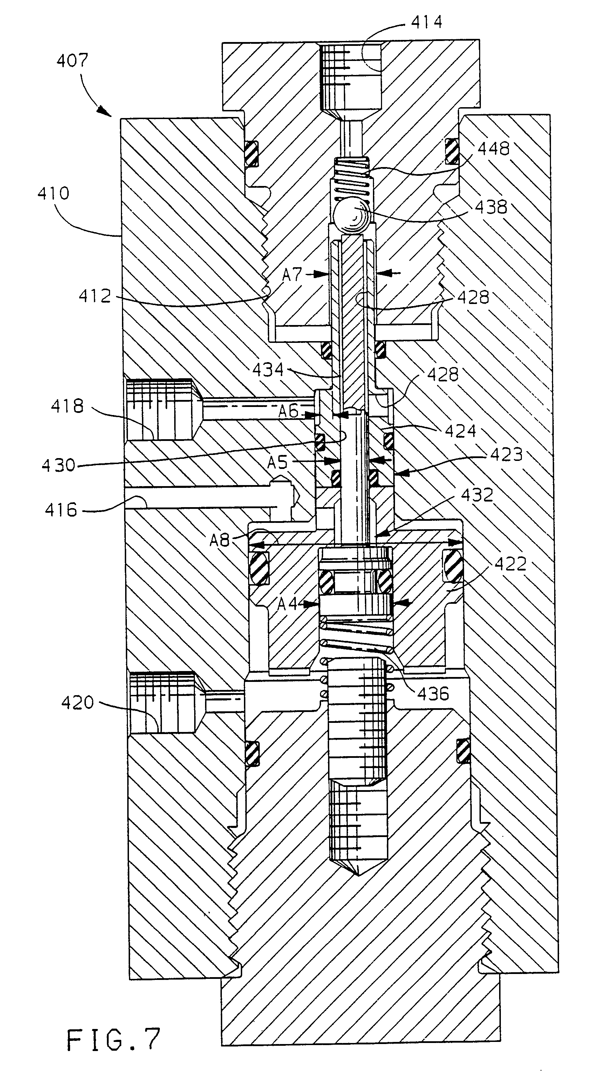

As mentioned previously, to get a generally linear ratio between the pressure felt in the outer second diameter area 244 with respect to the pressure fed to the first inner concentric area 228 by the master cylinder (as shown in FIGURE 9), there is provided a stabilization valve 407, as illustrated in FIGURE 7. The stabilizaton valve 407 has a body 410 with a longitudinal bore 412 of stepped diameter. The bore 412, at one end, has a fluid connection 420 for the master cylinder. The bore 412 also has a vent 416 to the atmosphere, an outlet 418 to the outer second diameter area 244 or third hydraulic cylinder via inlet 269 (FIGURE 5), and an inlet 414 from the second hydraulic cylinder 240. Slidably mounted within the bore 412 is first valve spool means 423 comprised of parts 422 and 424. Parts 422 and 424 may be integrally formed. The first valve spool means 423 has a multi-outer diameter configuration, three of the outer diameters being sealed within the bore 412. The first valve spool means 423 also has a passage 428 allowing fluid flow from the second hydraulic cylinder 240 to the outer second diameter area 244. Slidably and sealably mounted within an interior bore 430 of the first valve spool means 423 is a second valve spool means 432 sealed along two of its multiple outer diameters. The second valve spool means 432 has a reduced outer diameter section 434 cooperating with the first valve spool means 423 to provide the passage 428 from the inlet 414 to the outlet 418. The second valve spool means 432 is biased upward by a spring 436 to an extreme position, wherein it lifts a valve ball 438 away from the opening provided by the interior bore 430 of the first valve spool means 423. The valve ball 438 is also typically biased downward by a spring 448 away from the inlet 414 provided for the second hydraulic cylinder 240.

To control the gain of the self-energizing output, the stabilization valve 407 lowers the pressure delivered to the outer second diameter area 244. The device shown shows a second valve spool area A4 which is acted on by master cylinder pressure. Piston area A5 is acted on by boost pressure (from the booster or second hydraulic cylinder). At the desired maximum gain value of the caliper 224, the corresponding boost pressure may want to exceed the desired boost-master cylinder pressure ratio, which will cause the second valve spool means 432 to stroke such that the valve ball 438 will close the passage 428 to the outlet 418. The above will limit the gain of the caliper assembly. To maintain the desired gain, the pressure to outlet 418 must be stabilized when the inlet 414 is closed off. The above is done by adjusting the volume or displacement of the fluid acting upon the second area (via outlet 418). Concentric area A6 can move to increase this volume. Area A6 and A7 sees generated boost pressure which is compared to area A8 which sees master cylinder pressure. If the pressure on area A6 and A7 exceeds that of the predetermined boost/master cylinder pressure gain ration, the first valve spool means 423 piston moves to increase the outer second diameter area fluid volume which decreases torque output from the caliper 224, which decreases pressure delivered by the second hydraulic cylinder 240. With the boost pressure decreased, the master cylinder pressure acting on A8 forces the first valve spool means 423 to its original position. If the boost pressure decreases below the desired boost/master cylinder pressure ratio, the second valve spool means 432 moves to open the valve ball 438. This allows the boost pressures to increase on outer second diameter area 244. This repeated cycling stabilizes the maximum torque output of the caliper 224 for a given constant master cylinder pressure input. Therefore, when the pressure delivered by the second hydraulic cylinder 240 is lower, then a first multiple of the pressure delivered by the master cylinder, there will be free flow between the second hydraulic cylinder and the third hydraulic cylinder. Flow will be prevented when the pressure delivered by the second hydraulic cylinder exceeds the pressure delivered by the master cylinder by a second multiple higher than the first multiple, and fluid will be displaced in the third hydraulic cylinder when the pressure delivered by the second hydraulic cylinder exceeds the pressured delivered by the master cylinder by a third multiple higher than the second multiple.

The embodiments of Figures 1 and 2, and Figure 3 could be modified to include the compensation valve 253 of Figures 5 and 6 and/or the stabilization valve 407 of Figure 7.

## Claims

1. A disc brake for a wheel of a motor vehicle and which is activated by a master cylinder (10), comprising a rotor (14,114) fixably connected to the wheel, the rotor haing a rotational axis (16); a bracket (18,118,218) having a position generally fixed with respect to the rotational axis of the rotor; a caliper (24,124,224) slidably mounted with respect to the bracket and positioned in a plane generally perpendicular to the rotational axis of the rotor, the caliper being fluidly connected to the master cylinder; and a first hydraulic cylinder (28,228) in the caliper activated by pressure delivered by the master cylinder, the first hydraulic cylinder having a piston (32,230) for frictionally engaging the rotor to restrain rotation thereof; characterised by a second hydraulic cylinder (40,140,240) positioned between the caliper and the bracket, the second hydraulic cylinder having a piston (38,162,164,238) being pressurized by a reaction force experienced between the caliper and the bracket when the first hydraulic cylinder is activated; and a third hydraulic cylinder (44,144,244) fluidly connected with the second hydraulic cylinder to receive pressure therefrom, the third hydraulic cylinder having a piston (48,230) to frictionally engage the rotor to restrain rotation thereof.

2. A disc brake as claimed in claim 1, wherein the caliper (24,124,224) is a sliding type dual action caliper which slides generally parallel to the rotational axis (16) of the rotor (14,114).

3. A disc brake as claimed in claim 1 or claim 2, wherein the second and third hydraulic cylinders (240,244) are fluidly connected with the master cylinder (10) when the master cylinder is non activated by a compensation valve (253).

4. A disc brake as claimed in claim 3, wherein the compenation valve (253) comprises a linearly movable T section (255) having a central bore (257) providing a fluid connection between the master cylinder and the second and third hydraulic cylinders (240,244), the T section moving to engage a valve ball (259) to close the central bore at a predetermined pressure from the master cylinder.

5. A disc brake as claimed in any one of claims 1 to 4, further including a stabilization valve (407) between the second hydraulic cylinder (240) and the third hydraulic cylinder (244) causing the pressure delivered to the third hydraulic cylinder from the second hydraulic cylinder to be proportional to the pressure delivered by the master cylinder (10) to the first hydraulic cylinder (228).

6. A disc brake as claimed in claim 5, wherein the stabilization valve comprises means (414,418,428) for allowing free-flow between the second hydraulic cylinder (240) and the third hydraulic cylinder (244) so long as the pressure delivered by the second hydraulic cylinder to the third hydraulic cylinder is lower than a first multiple of the pressure delivered by the master cylinder to the first hydraulic cylinder (228); means (438) preventing flow from the second hydraulic cylinder to the third hydraulic cylinder when the pressure delivered by the second hydraulic cylinder exceed the pressure delivered by the master cylinder by a second multiple higher than the first multiple; and means (423,432,438) for displacing fluid from the third hydraulic cylinder when the pressure delivered by the second hydraulic cylinder to the third hydraulic cylinder exceeds the pressure delivered by the second hydraulic cylinder to the first hydraulic cylinder by a third multiple higher than the second multiple.

7. A disc brake as claimed in claim 6, wherein the stabilization valve (407) comprises a body (410) having a multi-diameter longitudinal bore (412) with a fluid connection (420) for the master cylinder at one end of the bore, and a fluid connection (414) from the second hydraulic cylinder (240) at an end generally opposite from the master cylinder connection, and an intermediate connection (418) to the third hydraulic cylinder (244) between the master cylinder and the second hydraulic cylinder connections; a first valve spool means (423) having first, second and third seal outer diameters slidably mounted within the multi-diameter longitudinal bore, the first valve spool means having a multi-diameter inner bore (430), and a passage means (428) allowing communication with an end of the first valve spool means adjacent the fluid connection (414) with the second hydraulic cylinder and to the fluid connection (418) with the third hydraulic cylinder; a second valve spool means (432) slidably mounted within the inner bore (430) of the first valve spool means sealably engaged along two diameters therewith and having a third section cooperating with the inner bore of the first valve spool means allowing fluid flow from the fluid connection (414) to the second hydraulic cylinder to the fluid connection (418) of the third hydraulic cylinder, and the second valve spool means having an extreme position with respect to the first valve spool means; and a ball (438) contacting the second valve spool means such that there is flow between the second hydraulic cylinder and the third hydraulic cylinder so long as the pressure delivered by the second hydraulic cylinder is lower than a first multiple of the pressured delivered by the master cylinder and the ball prevents flow from the second hydraulic cylinder to the third hydraulic cylinder when the pressure delivered by the second hydraulic cylinder exceeds the pressure delivered by the master cylinder by a second multiple higher than the first multiple wherein the second valve spool means moves away from the extreme position with respect to the first valve spool means, and wherein the ball and the first and second valve spool means move towards the fluid connection (420) to the master cylinder displacing fluid from the third hyraulic cylinder when the pressure delivered by the second hydraulic cylinder exceeds the pressure delivered by the master cylinder by a third multiple higher than the second multiple.

8. A disc brake as claimed in claim 7, wherein, between the first and second seal outer diameters of the first valve spool means (423), and between the two seal diameters of the second valve spool means (432), the multi-diameter longitudinal bore (412) and the multi-diameter inner bore (430) are vented to atmosphere.

9. A disc brake as claimed in any one of claims 1 to 8 wherein the third hydraulic cylinder (44,144) has a bore (46) located within the bracket (18,118).

10. A disc brake as claimed in any one of claims 1 to 8, wherein the first and third hydraulic cylinder (228,244) act on different areas of a single stepped piston (230) slidably mounted within a dual outer diameter bore located within the caliper (224).

11. A disc brake as claimed in any one of claims 1 to 10, wherein the caliper (124) slides along a line (160) generally straight and parallel to the plane of rotation of the rotor (114) when the first hydraulic cylinder is activated by the master cylinder (10).

12. A disc brake as claimed in claim 11, wherein the bracket (118) has two spaced ears (166,174) with apertures generally aligned with one another; the disc brake further comprising a sleeve (162) mounted into one (166) of the ears and having an opening projecting towards the other (174) of the ears; and a plunger (164) reciprocally mounted into the sleeve and having an end received into the aperture of the said other ear (174); the caliper (124) being mounted by the sleeve and the plunger with respect to the rotor (114) and being generally perpendicular with respect to the rotational axis (16) of the rotor; and the caliper sealably surrounding the sleeve and the plunger to form the second hydraulic cylinder.

13. A disc brake as claimed in any one of claims 1 to 10, wherein the second hydraulic cylinder (240) has a piston (238) slidably mounted in a bore (210) located within the caliper (224).

MASTER CYLINDER

FIG.1

FIG.2

FIG.3

FIG.4

FIG. 5

FIG. 6

FIG.7

FIG.8

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 446 948  (W. MELINAT)<br>* Figures 1-5 *<br>--- | 1 | F 16 D  65/16<br>F 16 D  55/225 |
| A | US-A-3 283 860  (MAMORU WATANABE)<br>* Whole document *<br>--- | 1 | |
| A | US-A-3 502 181  (P.A.G. LEPELLETIER)<br>* Whole document *<br>--- | 1 | |
| A | DE-A-2 742 561  (BAYERISCHE MOTOREN WERKE AG)<br>* Whole document *<br>--- | 1 | |
| A | GB-A-  951 602  (GIRLING LTD)<br>* Figures 1,2 *<br>--- | 1 | |
| A | GB-A-1 013 196  (THE BENDIX CORP.)<br>* Figures 1-6 *<br>--- | 1 | |
| A | US-A-3 277 982  (D.R. KIMBERLIN)<br>* Figures 1-3 *<br>--- | 1 | TECHNICAL FIELDS SEARCHED (Int. Cl.5) |
| A | GB-A-1 044 229  (SOCIETE ANONYME FRANCAISE DU FERODO)<br>* Figures 1-4 *<br>--- | 1 | F 16 D  65/00<br>F 16 D  55/00 |
| A | GB-A-1 225 879  (Dr.-ING. h.c.F. PORSCHE K.G.)<br>* Figures 1-3 *<br>----- | 1 | |

The present search report has been drawn up for all claims

| Place of search | Date of completion of the search | Examiner |
|---|---|---|
| THE HAGUE | 20-08-1990 | BRAEMS C.G.I. |